**Europäisches Patentamt**

**European Patent Office**

**Office européen des brevets**

(11) Veröffentlichungsnummer: **0 668 486 A2**

## (12) EUROPÄISCHE PATENTANMELDUNG

(21) Anmeldenummer: **94112392.9**

(22) Anmeldetag: **09.08.94**

(51) Int. Cl.⁶: **G01D 5/14**

(30) Priorität: **22.02.94 DE 4405513**
**19.07.94 DE 4425416**
**02.08.94 DE 4427278**

(43) Veröffentlichungstag der Anmeldung:
**23.08.95 Patentblatt 95/34**

(84) Benannte Vertragsstaaten:
**AT CH DE FR GB IT LI**

(71) Anmelder: **Dr. Johannes Heidenhain GmbH**
**Postfach 12 60**
**D-83292 Traunreut (DE)**

(72) Erfinder: **Nelle, Günther, Dr.**
**Eichenweg 12**
**D-83346 Bergen (DE)**
Erfinder: **Kranitzky, Walter, Dr.**
**Innstrasse 15**
**D-83278 Traunstein (DE)**
Erfinder: **Mauerberger, Herbert**
**Gmelchstrasse 16**
**D-83278 Traunstein (DE)**

(54) **Längen- oder Winkelmesseinrichtung.**

(57) Bei einer Längenmeßeinrichtung sind an den Endbereichen an einer Fläche einer Maßverkörperung (1) Magnetstreifen (5.1, 5.2) aufgesetzt. Diese Magnetstreifen (5.1, 5.2) werden von einem Hallelement (7) abgetastet. Die Magnetstreifen (5.1, 5.2) und das Hallelement (7) bilden Grenzlagenschalter zum Abschalten eines Antriebes. Durch diese Grenzlagenschalter wird der zulässige Arbeitsbereich begrenzt, um eine Kollision zwischen Maschinenteilen zu vermeiden.

FIG. 1

EP 0 668 486 A2

Die Erfindung betrifft eine Längen- oder Winkelmeßeinrichtung nach dem Oberbegriff des Anspruches 1.

Derartige Positionsmeßeinrichtungen werden insbesondere bei Bearbeitungsmaschinen zur Messung der Relativlage eines Werkzeuges bezüglich eines zu bearbeitenden Werkstückes sowie bei Koordinatenmeßmaschinen zur Ermittlung von Lage und Abmessungen von Prüfobjekten eingesetzt.

Aus Sicherheitsgründen wird bei der Messung beispielsweise an Werkzeugmaschinen gefordert, den zulässigen Arbeitsbereich durch Grenzlagenschalter zu begrenzen. Bei Erreichen der Grenzlagenschalter wird der Vorschub für die sich bewegende Einheit sofort abgeschaltet, um eine Kollision mit benachbarten Baueinheiten zu vermeiden.

Um den Raumbedarf und die Kosten für den Anbau derartiger Grenzlagenschalter zu verringern und die Vielseitigkeit von Meßeinrichtungen zu erhöhen, wurde in der EP 0 145 844 B1 bereits vorgeschlagen, Grenzlagenschalter an einer Fläche eines Maßstab- oder Teilungsträgers der Meßeinrichtung anzuordnen. Die Grenzlagenschalter sind als elektromechanische Schaltnocken ausgebildet.

Direkt an der Meßeinrichtung angebrachte Grenzlagenschalter sind weiterhin aus der EP 0 171 383 B1, DE 42 00 616 A1, DE 41 11 873 und der DE 92 09 801 U1 bekannt.

In der DE 92 09 801 U1, von der diese Erfindung ausgeht, ist bereits eine Meßeinrichtung beschrieben, bei der die Grenzlagenschalter magnetisch abtastbare Steuermarken sind.

Der Erfindung liegt die Aufgabe zugrunde, eine Längen- oder Winkelmeßeinrichtung zu schaffen, bei der mit einfachen Mitteln eine sichere Grenzlagenerkennung ermöglicht wird.

Diese Aufgabe wird durch die Merkmale des Anspruches 1 gelöst.

Die besonderen Vorteile der Erfindung liegen darin, daß die Grenzlagenschalter besonders einfach an den Anwendungsfall, insbesondere an den Querschnitt und an die Meßlänge der Meßeinrichtung angepaßt werden können.

Vorteilhafte Ausführungsformen der Erfindung sind in den abhängigen Ansprüchen angegeben.

Anhand der Zeichnungen werden Ausführungsbeispiele der Erfindung erläutert.

Es zeigen

| | |
|---|---|
| Figur 1 | eine erfindungsgemäß ausgebildete Maßverkörperung einer Längenmeßeinrichtung, |
| Figur 2 | einen Magnetstreifen der Längenmeßeinrichtung nach Figur 1, |
| Figur 3 | eine Maßverkörperung mit Referenzmarken, |
| Figur 4 | eine weitere Maßverkörperung mit Referenzmarken, |
| Figur 5a und 5b | Signaldiagramme der Längenmeßeinrichtung gemäß Figur 4, |
| Figur 6 | ein weiteres Signaldiagramm der Längenmeßeinrichtung gemäß Figur 4, |
| Figur 7 | eine Maßverkörperung mit einem Magnetstreifen zur Unterscheidung der rechten und linken Seite einer Referenzmarke, |
| Figur 8 | ein Signaldiagramm mit Signalen, welche bei der Abtastung der Maßverkörperung gemäß Figur 7 entstehen, |
| Figur 9 | eine gekapselte Längenmeßeinrichtung, |
| Figur 10 | eine Schaltung zur Auswertung der Hallspannung, |
| Figur 11 | eine Überwachungsschaltung, |
| Figur 12 | eine Schaltung zur Unterscheidung der Endbereiche, |
| Figur 13 | eine Logikschaltung, |
| Figur 14 | ein Signaldiagramm mit Signalen, welche bei der Abtastung der Magnetstreifen gemäß Figur 9 entstehen, |
| Figur 15 | eine Überwachungseinrichtung und |
| Figur 16 | ein Signaldiagramm. |

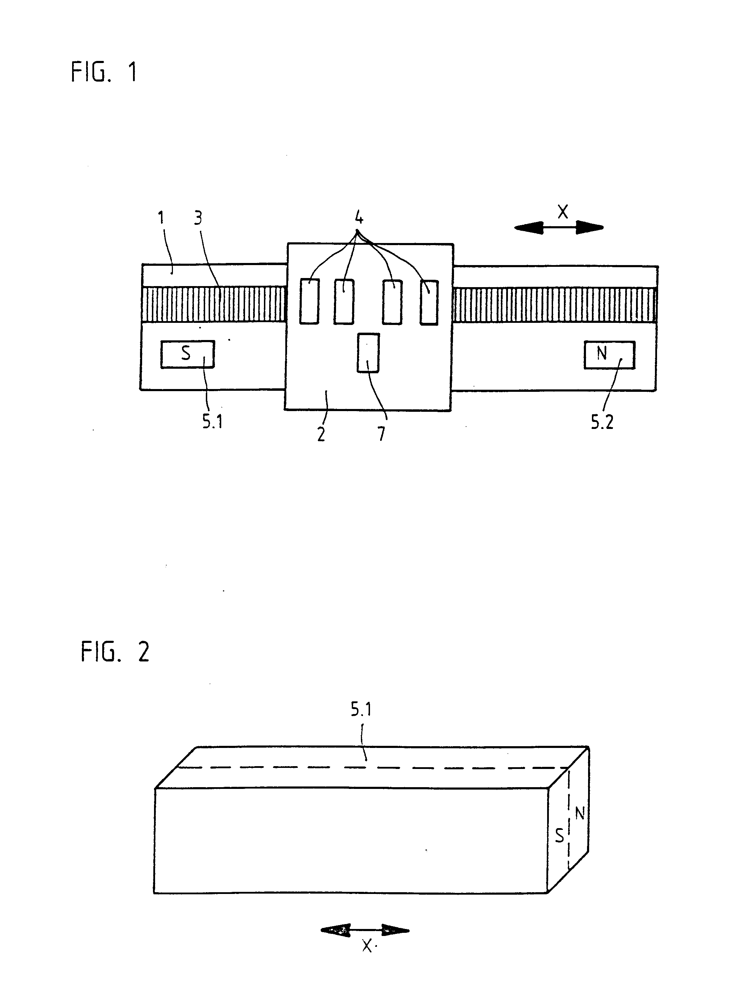

In Figur 1 ist eine Maßverkörperung 1 einer Längenmeßeinrichtung schematisch dargestellt. Bei gekapselten Längenmeßeinrichtungen ist diese Maßverkörperung 1 innerhalb eines Hohlprofils geschützt untergebracht und das Hohlprofil am Schlitten einer Werkzeugmaschine oder Meßmaschine montiert. Bei offen betriebenen Längenmeßeinrichtungen ist die Maßverkörperung 1 direkt an einem Teil der Maschine befestigt.

Im Meßbetrieb wird eine Abtasteinrichtung 2 in geringem Abstand über die Maßverkörperung 1 in Meßrichtung X geführt und somit die Relativlage zwischen der Maßverkörperung 1 und der Abtasteinrichtung 2 erfaßt.

Eine auf der aus Glas bestehenden Maßverkörperung 1 aufgebrachte inkrementale Teilung 3 wird in bekannter Weise von mehreren Abtastelementen 4 abgetastet. Im Bereich der beiden Enden der Maßverkörperung 1 ist jeweils ein Magnetstreifen 5.1, 5.2 auf der Oberfläche der Maßverkörperung 1 aufgeklebt. Zur Abtastung dieser Magnetstreifen 5.1, 5.2 ist in der Abtasteinrichtung 2 ein Hallelement 7 vorgesehen. Gelangt die Abtasteinrichtung 2 in den Bereich der Enden und somit in den Bereich des Magnetfeldes

2

eines Magnetstreifens 5.1, 5.2 so wird im Hallelement 7 ein Signal erzeugt, das an den Antrieb einer Maschine gelegt ist und unmittelbar den Antrieb stillsetzt. Die Magnetstreifen 5.1, 5.2 mit dem Hallelement 7 bilden somit die Grenzlagenschalter, welche den Schutz gegen Überfahren vorgegebener Grenzen gewährleisten.

Hallelemente sind magnetfeldabhängige Halbleiter, die auf der Ausnutzung des Hall-Effektes beruhen. Beim Hallelement wird an zwei gegenüberliegenden Seiten eines dünnen Halbleiterplättchens eine Hallspannung abgenommen, wenn es von einem Strom durchflossen und senkrecht zu dem Plättchen von einem Magnetfeld durchsetzt wird. Diese Hallspannung ändert sich entsprechend der Richtung und Stärke des Magnetfeldes sowie dem durchfließenden Strom. Durch das Zusammenwirken von Magnetfeld und Strom entsteht eine Spannung, so daß man von einem Generator sprechen kann, weshalb Hallelemente auch als Hallgeneratoren, aber auch als Hall effect transducer oder Hallsensoren bezeichnet werden. Hallelemente haben gegenüber anderen Magnetfeldsensoren den Vorteil, daß ihr Ausgangssignal eine annähernd lineare Abhängigkeit von der Stärke des Magnetfeldes aufweist und daß dessen Vorzeichen beim Umpolen des Magnetfeldes wechselt. Gegenüber Reed-Schaltern besteht weiterhin der Vorteil, daß Hallelemente keine mechanischen Kontakte besitzen, und daß Hallelemente äußerst wenig Raum beanspruchen.

Die Ausbildung der Magnetstreifen 5.1, 5.2 ist in Figur 2 gezeigt. Die Polung ist derart gewählt, daß eine dem Hallelement 7 gegenüberliegende Fläche des Magnetstreifens 5.1, 5.2 einen Süd- oder Nordpol und die auf der Rückseite liegende Fläche einen dazu inversen Pol aufweist, so daß das entstehende Magnetfeld senkrecht zur Meßrichtung X verläuft. Bei dieser Ausgestaltung ist es möglich, lange Magnetstreifen 5.1, 5.2 vorzusehen, die eine sichere Grenzlagenschalt-Funktion gewährleisten. Ein derartiger Magnetstreifen 5.1, 5.2 ist etwa 1mm dick und einige cm lang.

Weiterhin ist bei Verwendung derartiger Magnetstreifen 5.1, 5.2 auf einfache Weise die Unterscheidung zwischen rechtem und linkem Endbereich der Maßverkörperung 1 möglich. Wie aus Figur 1 ersichtlich ist, wurde der Magnetstreifen 5.1 am linken Ende der Maßverkörperung 1 mit der Fläche des Nordpoles aufgeklebt, so daß dem Hallelement 7 die Fläche des Südpoles gegenübersteht. Am rechten Ende der Maßverkörperung 1 wurde der Magnetstreifen 5.2 mit dem Südpol aufgeklebt, so daß dem Hallelement 7 der Nordpol gegenübersteht. Ein Hallelement 7 ist bekannterweise ein magnetfeldempfindlicher Sensor, der die Richtung eines Magnetfeldes erkennt und daher unterschiedliche Signalpegel am rechten und linken Ende abgibt.

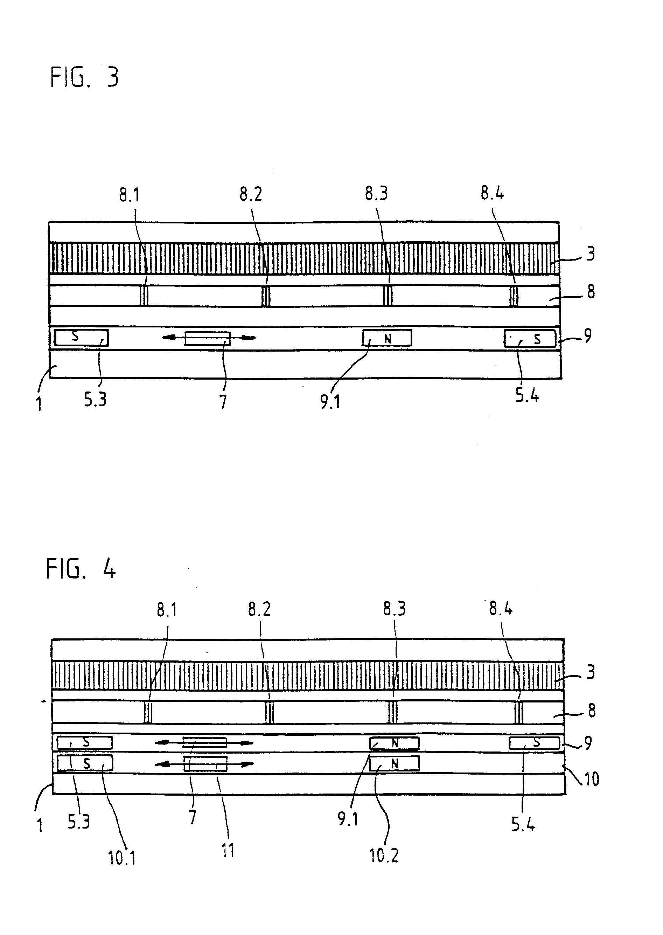

Die Erfindung kann auch bei einer Längenmeßeinrichtung mit Referenzmarken 8.1 bis 8.4 nach Figur 3 eingesetzt werden. Parallel zur inkrementalen Teilung 3 ist eine Referenzmarkenspur 8 mit mehreren, gleichbeabstandeten Referenzmarken 8.1 bis 8.4 vorgesehen, von denen nach Kundenwunsch in an sich bekannter Weise (DE 25 40 412 C3) eine auswählbar und aktivierbar ist. Zu dieser Auswahl ist eine weitere Spur 9 vorgesehen, in der einer beliebigen Referenzmarke 8.3 ein Magnetstreifen 9.1 zugeordnet werden kann. Zusätzlich sind erfindungsgemäß in dieser Spur 9 weitere Magnetstreifen 5.3, 5.4 an den Endbereichen der Maßverkörperung 1 vorgesehen. Die drei Magnetstreifen 5.3, 5.4, 9.1 werden von einem Hallelement 7 abgetastet und aufgrund der unterschiedlichen Polarität der Magnetstreifen 5.3, 5.4, 9.1 ist die Unterscheidung zwischen Referenzmarke 8.3 und Endbereich möglich. Beispielsweise steht dem Hallelement 7 bei der Referenzmarke 8 ein Nordpol und an den Enden jeweils ein Südpol gegenüber.

Um auch hier zusätzlich eine Unterscheidung zwischen rechtem und linkem Endbereich zu erreichen, kann eine weitere Spur 10 mit Magnetstreifen 10.1, 10.2 vorgesehen werden, wie in Figur 4 gezeigt. Diese weitere Spur 10 wird von einem weiteren Hallelement 11 abgetastet.

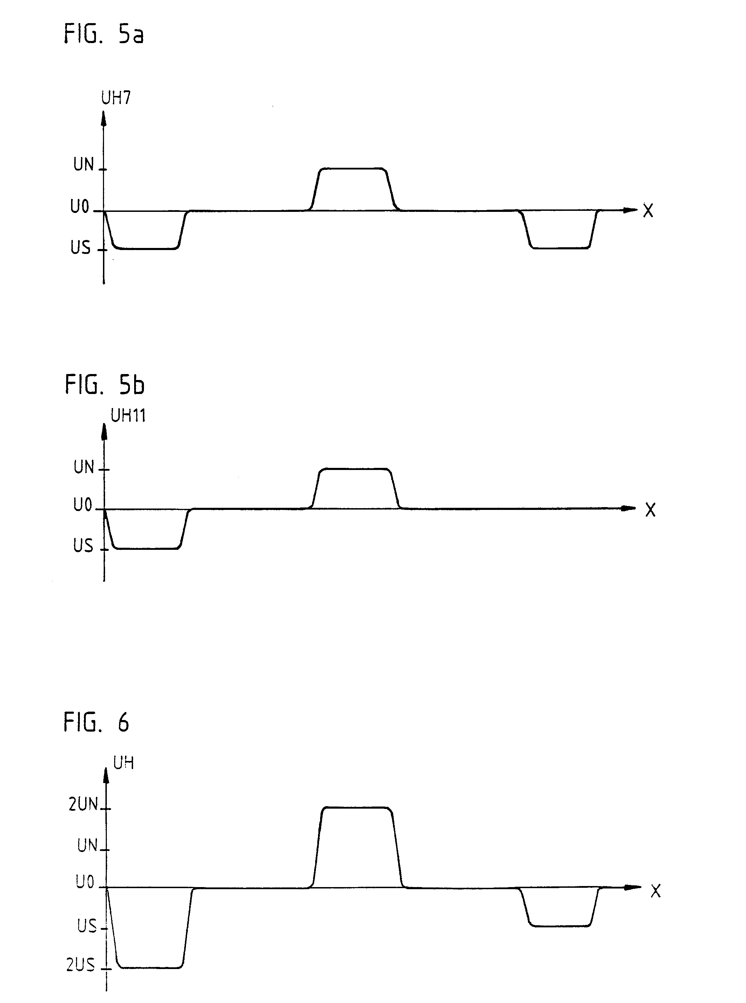

In den Figuren 5a und 5b sind die Signale der Hallelemente 7 und 11 dargestellt. Die Signale sind als Hallspannung UH in Abhängigkeit von der Position X aufgetragen. UO ist die Hallspannung UH, ohne daß ein Magnetfeld einwirkt. UN ist die Hallspannung UH beim Überfahren eines Nordpoles N und US die Hallspannung UH beim Überfahren eines Südpoles S. Aus Figur 5a ist erkennbar, daß die Hallspannung UH7 des Hallelementes 7 an der Referenzmarke 8.3 einen anderen Spannungspegel als an den Endbereichen aufweist. Das weitere Hallelement 11 weist dagegen auch an den beiden Endbereichen unterschiedliche Spannungspegel UH11 auf. Die Kombination der Magnetstreifen 5.3, 5.4, 9.1, 10.1 und 10.2 ergibt somit eine Art Codierung zur Unterscheidung von vier verschiedenen Bereichen.

Die in Figur 4 dargestellten Spuren 9 und 10 können auch mittels eines einzigen breiten Hallelementes abgetastet werden. Dieses Hallelement detektiert am linken Endbereich das resultierende Magnetfeld der beiden Magnetstreifen 5.3 und 10.1, bei der Referenzmarke 8.3 das resultierende Magnetfeld der beiden Magnetstreifen 9.1 und 10.2, sowie am rechten Endbereich das Magnetfeld des Magnetstreifens 5.4. Die Hallspannung UH dieses nicht dargestellten Hallelementes ist in Figur 6 in Abhängigkeit der Position X dargestellt.

Die Codierung zur Unterscheidung zwischen Referenzmarke oder Endlage rechts und Endlage links kann auch durch die Verwendung unterschiedlich breiter Magnetstreifen und/oder Magnetstreifen unterschiedlich starker Magnetisierung erfolgen. Um diese unterschiedlich starke Magnetisierung zu erreichen, ist es auch vorteilhaft, Magnetstreifen paketartig aufeinanderzulegen, wobei die gleichsinnigen Pole jeweils in eine Richtung weisen. Diese Variante hat den Vorteil, daß nur Magnetstreifen mit gleicher Magnetisierungsstärke verwendet werden müssen, und daß die Magnetstreifen in einer Spur angeordnet sein können. Das in Figur 6 dargestellte Ausgangssignal eines Hallelementes 7 erhält man somit auch, wenn der Magnetstreifen 10.1 gemäß Figur 4 auf den Magnetstreifen 5.3, sowie der Magnetstreifen 10.2 auf den Magnetstreifen 9.1 aufgeklebt wird.

In nicht gezeigter Weise ist es weiterhin möglich, in einer Spur die Auswahl einer Referenzmarke mit einem einzigen Magnetstreifen und in der weiteren Spur die Kennzeichnung der Endbereiche mit Magnetstreifen unterschiedlicher Polarität - wie in Figur 1 gezeigt - vorzusehen.

Zur Unterscheidung (Codierung) der unterschiedlichen Positionen der Endbereiche, sowie einer oder mehrerer Referenzmarken können Magnetstreifen auch in mehr als zwei Spuren vorgesehen werden.

Bei inkrementalen Meßeinrichtungen mit Referenzmarken ist es vorteilhaft, wenn nach Unterbrechungen des Meß- bzw. Arbeitsvorganges die nächste Referenzmarke sofort in der richtigen Richtung angefahren werden kann. Hierzu ist erforderlich, daß von der Auswerteeinrichtung erkannt werden kann, ob sich die Abtasteinrichtung 2 links oder rechts von einer Referenzmarke befindet. Eine derartig ausgestaltete Längenmeßeinrichtung ist an sich bereits aus der DE 35 26 206 A1, sowie der DE 92 09 801 U1 bekannt.

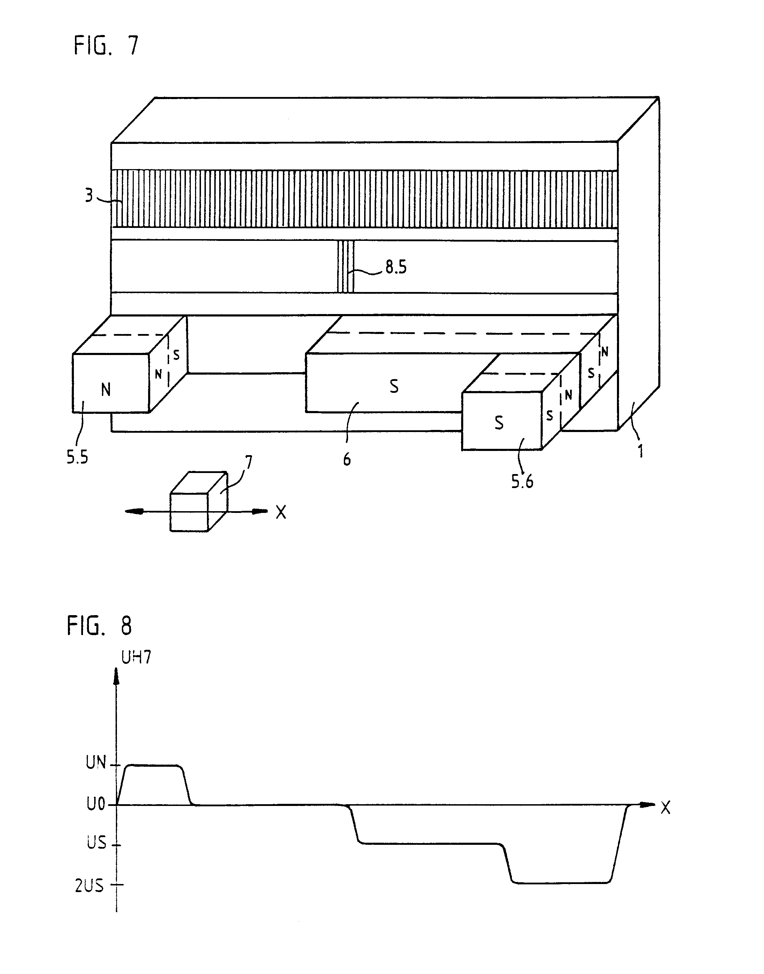

In Figur 7 ist eine derartige Längenmeßeinrichtung dargestellt, bei der zusätzlich zu den Magnetstreifen 5.5 und 5.6 an den Endbereichen ein Magnetstreifen 6 zur Markierung des Bereiches rechts von der Referenzmarke 8.5 vorgesehen ist. Am linken Ende der Maßverkörperung 1 ist ein Magnetstreifen 5.5 mit dem flächigen Südpol aufgeklebt, so daß bei der Abtastung mit einem Hallelement 7 die Hallspannung $U_{H7}$ = $U_N$ gemäß Figur 8 ansteht. Auf der rechten Seite der Referenzmarke 8.5 ist der Magnetstreifen 6 mit dem flächigen Nordpol aufgeklebt, so daß der Südpol dem Hallelement 7 gegenübersteht. Am rechten Endbereich der Maßverkörperung 1 ist auf die Oberfläche des Magnetstreifens 6 ein weiterer Magnetstreifen 5.6 aufgeklebt, so daß ebenfalls der Südpol dem Hallelement 7 gegenübersteht. Bei einer Relativbewegung zwischen der Maßverkörperung 1 und dem Hallelement 7 wird vom Hallelement 7 die Hallspannung $U_{H7}$ nach Figur 8 erzeugt. Es ist ersichtlich, daß die Hallspannung $U_{H7}$ über die gesamte Meßlänge vier unterschiedliche Pegel $U_N$, $U_0$, $U_S$, $2U_S$ einnimmt und somit mit einfachen Mitteln vier Bereiche eindeutig unterscheidbar werden.

Die Magnetstreifen 5.1 bis 5.6, 9.1, 10.1, 10.2 und 6 können auch in einer Nut auf der Maßverkörperung verschiebbar und somit einstellbar befestigt werden.

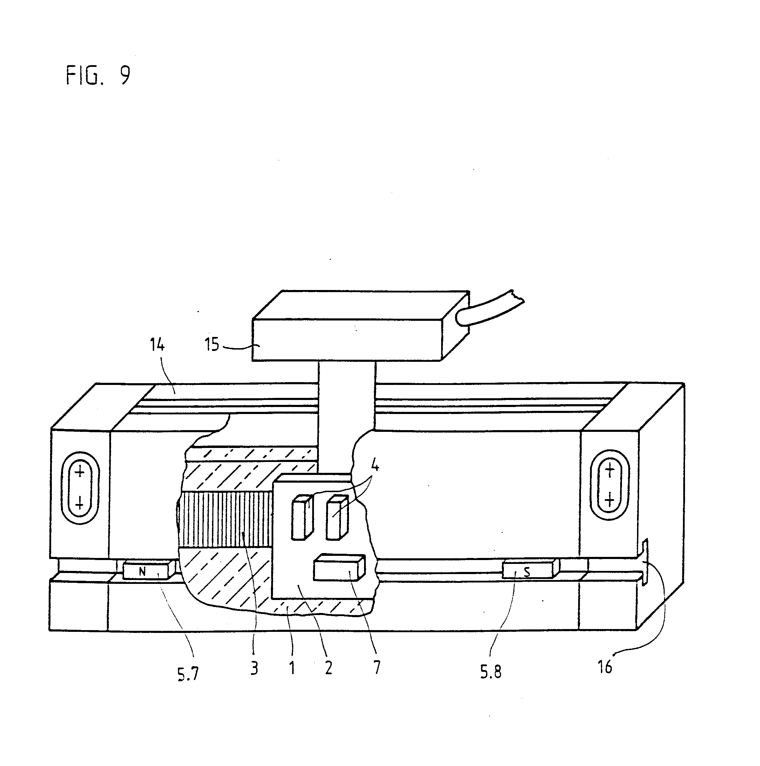

In Figur 9 ist dargestellt, wie die Erfindung bei einer gekapselten Längenmeßeinrichtung eingesetzt werden kann. Eine Maßverkörperung 1 mit einer inkrementalen Teilung 3 ist innerhalb eines Gehäuses 14 befestigt und wird von einer Abtasteinrichtung 2, welche an einem Montagefuß 15 befestigt ist, abgetastet. Die Grenzlagenschalter bestehen wiederum aus jeweils einem Magnetstreifen 5.7 und 5.8 an den Enden des Meßbereiches und aus einem Hallelement 7 der Abtasteinrichtung 2. Zur einstellbaren Befestigung der Magnetstreifen 5.7, 5.8 ist an einer Außenfläche des Gehäuses 14 eine Nut 16 zur Aufnahme der Magnetstreifen 5.7, 5.8 vorgesehen. Die Magnetstreifen 5.7, 5.8 sind derart angeordnet, daß auf der rechten Seite dem Hallelement 7 ein Nordpol und auf der linken Seite ein Südpol gegenübersteht. Auch bei der gekapselten Ausführungsform können am Gehäuse eine oder mehrere weitere Spuren zur Aufnahme weiterer Magnetstreifen vorgesehen sein, ähnlich den Figuren 3, 4 und 7. Die Magnetstreifen können auch auf eine Außen- oder Innenfläche des Gehäuses geklebt sein.

Anstelle des Gehäuses kann die Maßverkörperung auch von einem anderen Träger gehalten und mit diesem an einem zu messenden Objekt befestigt werden. Die Magnetstreifen können dann auch an diesem Träger aufgesetzt sein.

Um eine Ansammlung von Metallspänen um die Magnetstreifen zu verhindern, sind diese vorzugsweise mit Kunststoff umhüllt.

Gemäß der Erfindung können auch die Magnetstreifen in der Abtasteinrichtung und jeweils ein Hallelement an den Endbereichen der Maßverkörperung oder des Trägers vorgesehen sein.

Die Erfindung ist bei inkrementalen und codierten Längen- und Winkelmeßeinrichtungen einsetzbar, wobei je nach Anwendungsfall zur Begrenzung des Arbeitsbereiches ein oder mehrere Magnetstreifen vorgesehen sein können.

Das Hallelement 7 und/oder 11 ist vorzugsweise an eine Überwachungsschaltung 20 angeschlossen, um den Ausfall durch internen Defekt des Hallelementes 7 oder durch einen Bruch der Zuleitungen 24, 25, 26, 27 zu erkennen. Wird ein Ausfall eines Hallelementes 7, 11 erkannt, wird der Motor einer Antriebseinheit sofort stillgesetzt, um ein Überfahren der Grenzlagen und somit eine Kollision zwischen Maschinenteilen zu vermeiden. Die Überwachungsschaltung 20 kann aber auch nur ein Alarmsignal abgeben, wenn ein Ausfall eines Hallelements 7, 11 oder ein Leitungsbruch erkannt wird.

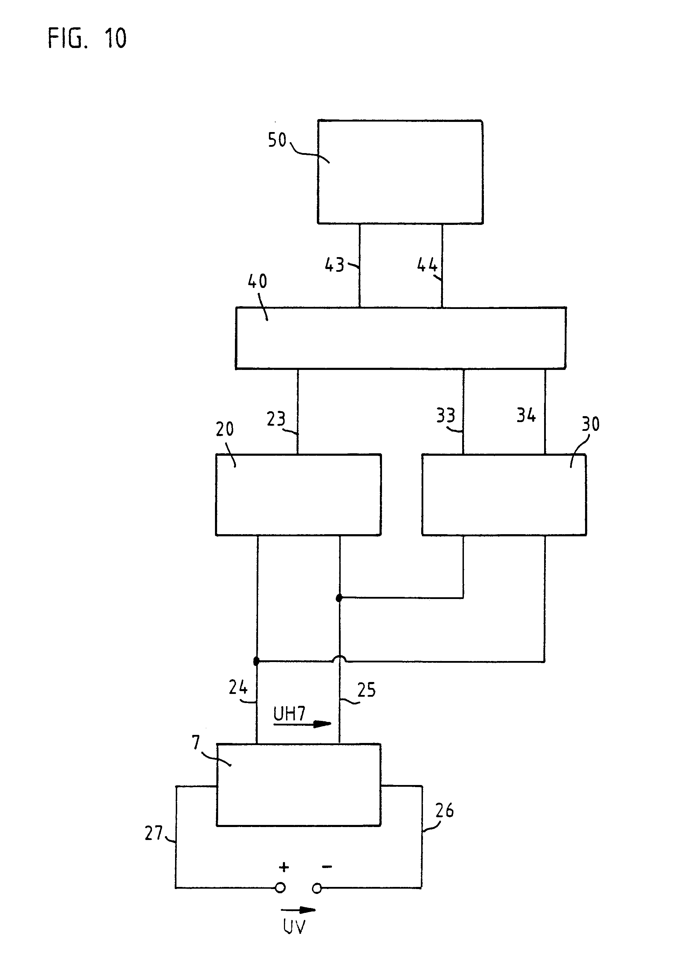

In Figur 10 ist eine Schaltung dargestellt, welcher die Hallspannung UH7 des Hallelementes 7 zugeführt wird. Diese Schaltung besteht aus einer Überwachungsschaltung 20, einer Schaltung 30 zur Erkennung der Endlage, einer Logikschaltung 40, sowie einer Auswerteeinheit 50.

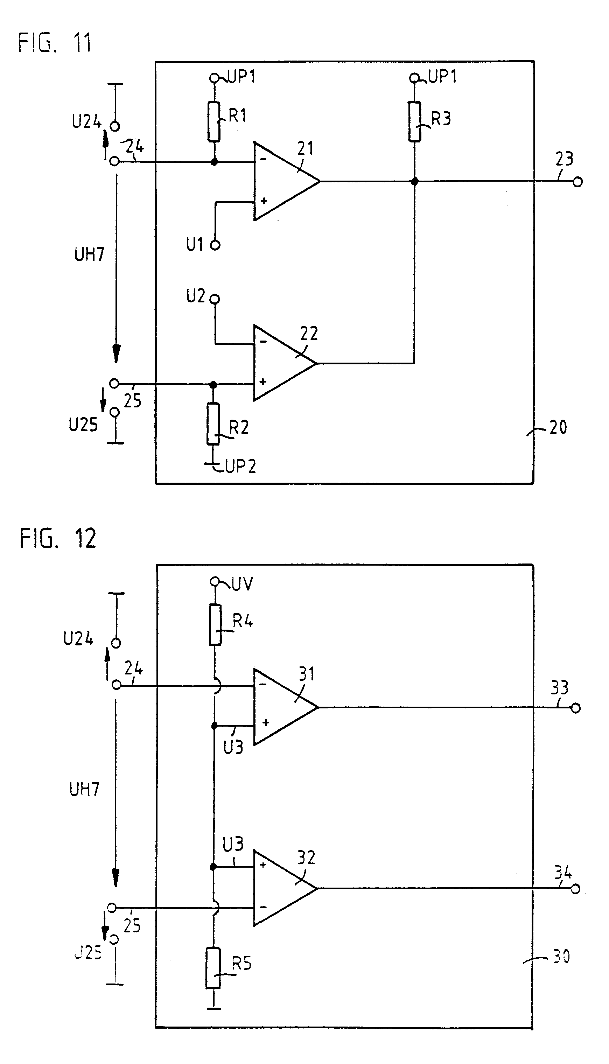

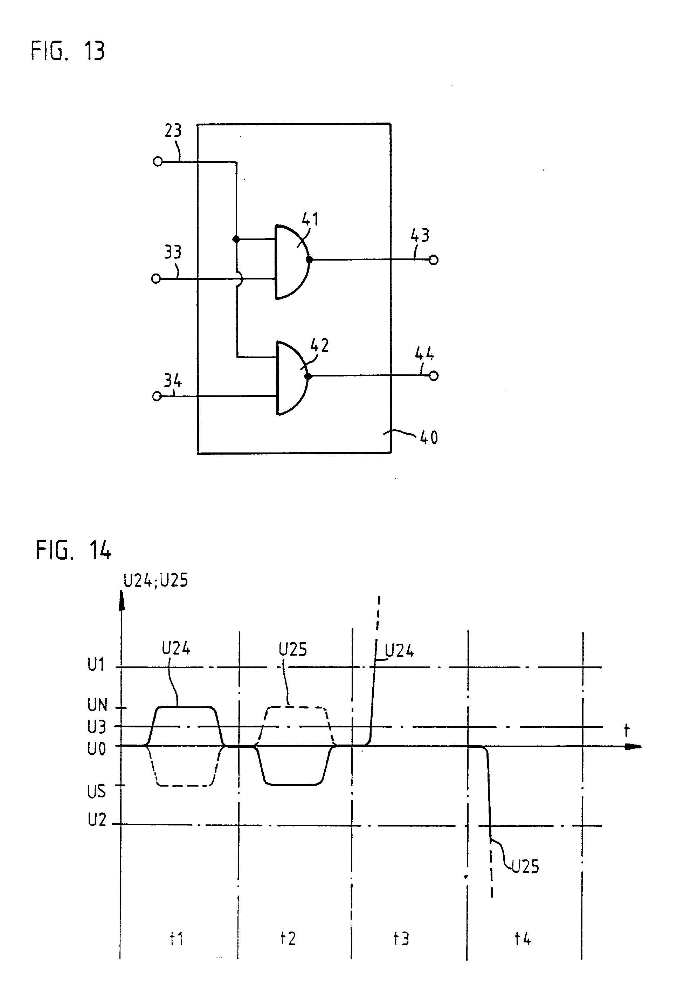

Die Überwachungsschaltung 20 ist in Figur 11 im Detail dargestellt. Das Hallelement 7 wird mit einer Versorgungsspannung UV = 5V betrieben. An den Zuleitungen 24, 25 ist die Hallspannung UH7 als Differenzspannung dieser Zuleitungen 24, 25 abnehmbar. Diese Hallspannung UH7 ist im Regelfall ohne Anwesenheit eines Magnetfeldes etwa 0V. Bei Anwesenheit eines Magnetfeldes der einen Richtung steigt die Hallspannung UH7, bei Anwesenheit eines Magnetfeldes der entgegengesetzten Richtung sinkt die Hallspannung UH7. Bei handelsüblichen Hallgeneratoren 7 steht ohne Anwesenheit eines Magnetfeldes an jeder der Zuleitungen 24, 25 etwa die halbe Versorgungsspannung UV an. Werden die Spannungen U24, U25 der Zuleitungen 24, 25 jeweils gegen Potential 0V gemessen, so ist U24 = U25 = UV/2 = 2,5V bei UV = 5V. Diese Spannung ist in Figur 14 als U0 eingezeichnet. Steht dem Hallelement 7 der Nordpol des linken Magnetstreifens 5.7 gemäß Figur 9 gegenüber, steigt die Hallspannung UH7 auf etwa 100mV mit U24 = 2,55V und U25 = 2,45V, dieser Zustand ist in Figur 14 im Bereich t1 dargestellt. Steht dem Hallelement 7 der Südpol des rechten Magnetstreifens 5.8 gemäß Figur 9 gegenüber, sinkt die Hallspannung UH7 entsprechend auf den Wert -100mV mit U24 = 2,45V und U25 = 2,55V, dieser Zustand ist in Figur 14 im Bereich t2 dargestellt. Die im Normalbetrieb auftretenden maximalen und minimalen Spannungen an den Zuleitungen 24, 25 sind mit UN und US bezeichnet. Die Überwachungsschaltung 20 gewährleistet, daß die detektierten Spannungen U24, U25 bei einem Defekt des Hallelementes 7, sowie bei Leitungsbruch den Wert UN überschreiten bzw. den Wert US unterschreiten. Hierzu ist das Hallelement 7 mittels zweier Zuleitungen 24, 25 an der Überwachungsschaltung 20 angeschlossen, wobei die Zuleitung 24 über einen hohen Vorwiderstand R1 an einer Vorspannung UP1 = 5V liegt. Ebenso ist die andere Zuleitung 25 mit einem hohen Vorwiderstand R2 mit Masse als Bezugspotential UP2 verbunden.

Jede der Zuleitungen 24, 25 ist weiterhin mit einem Komparator 21, 22 verbunden. Jeder dieser Komparatoren 21, 22 liefert am Ausgang ein logisches Binärsignal 0, wenn die Spannung am invertierenden (-) Eingang größer ist als die Spannung am nichtinvertierenden (+) Eingang. Entsprechend ist das Ausgangssignal 1, wenn die Spannung am invertierenden Eingang (-) kleiner ist als die Spannung am nichtinvertierenden (+) Eingang.

Am invertierenden Eingang (-) des einen Komparators 21 liegt die Spannung U24 des Hallelementes 7, sowie die Vorspannung UP1 über den Vorwiderstand R1 an. Eine Vergleichsspannung U1 = 2,7V steht am nichtinvertierenden (+) Eingang des Komparators 21 an. Analog dazu steht am invertierenden Eingang (-) des weiteren Komparators 22 die Vergleichsspannung U2 = 2,3V an. Am nichtinvertierenden (+) Eingang des Komparators 22 ist die Spannung U25 des Hallelementes 7, sowie über den Vorwiderstand R2 das Bezugspotential UP2 angeschaltet. Die Ausgänge beider Komparatoren 21, 22 sind zusammengeschaltet, wobei die Ausgangsleitung 23 ebenfalls über einen Widerstand R3 an der Vorspannung UP1 liegt. Tritt nun in der Zuleitung 24 ein Leitungsbruch auf, so steigt die von der Überwachungsschaltung 20 detektierte Spannung U24 auf etwa UP1 = 5V an. Dieser Zustand ist in Figur 14 im Bereich t3 dargestellt. Die Ursache hierfür ist die definierte Vorspannung UP1 am Vorwiderstand R1, der auch als "pull-up-Widerstand" bezeichnet wird. Ebenso steigt die Spannung U24 auf etwa 5V, wenn die Leitung 26 des Hallelements 7 zerstört ist. Die von der Überwachungsschaltung 20 detektierte Spannung U25 sinkt auf etwa UP2 = 0V, wenn die Leitung 25 oder 27 zerstört ist. Dieser Zustand ist in Figur 14 im Bereich t4 dargestellt. Bei einem Defekt des Hallelementes 7 sinkt oder steigt die Spannung U24 oder U25 ebenfalls auf 0V oder 5V. Zur Ausgabe eines Fehlersignales auf der Leitung 23 werden die Spannungen U24, U25 mit den Vergleichsspannungen U1, U2 verglichen. Ein Fehlersignal (Binärsignal 0) wird abgegeben, wenn die Spannung U24 die Vergleichsspannung U1 überschreitet oder wenn die Spannung U25 die Vergleichsspannung U2 unterschreitet. Wenn die Spannungen U24, U25 innerhalb des von den beiden Vergleichsspannungen U1, U2 begrenzten Fensters liegen, wird das Binärsignal 1 abgegeben, was die korrekte Betriebsweise anzeigt.

Die Schaltung 30 zur Erkennung der Endbereiche rechts bzw. links ist in Figur 12 dargestellt. Die Spannungen U24, U25, von denen die Hallspannung UH7 abhängt, werden mittels zweier Komparatoren 31, 32 mit einer Vergleichsspannung U3 verglichen. Die Vergleichsspannung U3 wird durch einen Spannungsteiler, bestehend aus zwei Widerständen R4, R5, aus der Versorgungsspannung UV gebildet, wobei U3 = 2,525V ist.

Gemäß Figur 9 ist am linken Endbereich der Magnetstreifen 5.7 angeordnet, dessen Oberfläche mit dem Nordpol dem Hallelement 7 bei der Abtastung gegenübersteht. In diesem linken Endbereich steht am Ausgang des Hallelementes 7 die Hallspannung UH7 = 100mV an, mit U24 = 2,55V und U25 = 2,45V wie in Figur 14 im Bereich t1 dargestellt. Die Spannung U24 wird mittels des Komparators 31 mit der Vergleichsspannung U3 = 2,525V verglichen, so daß das an der Ausgangsleitung 33 anstehende Signal beispielsweise bei U24 > U3 das Binärsignal 0 und bei U24 < U3 das Binärsignal 1 ist.

Wenn die Abtasteinrichtung 2 den rechten Endbereich erreicht, ist die am Hallelement 7 anstehende Hallspannung UH7 = - 100mV, da in diesem Bereich der flächige Südpol des Magnetstreifens 5.8 dem Hallelement 7 gegenübersteht und somit die Richtung der Feldstärke des Magnetstreifens 5.8 vom Hallelement 7 in Richtung des Magnetstreifens 5.8 gerichtet ist. Die Spannung U25, welche in Figur 14 im Bereich t2 dargestellt ist, wird mittels des Komparators 32 mit der Vergleichsspannung U3 verglichen. An der Ausgangsleitung 34 steht bei U25 > U3 das Binärsignal 0 und bei U25 < U3 das Binärsignal 1 an. An den Ausgangssignalen der Schaltung 30 ist somit eindeutig erkennbar, ob sich die Abtasteinrichtung 2 am linken oder rechten Ende der Maßverkörperung 1 befindet. Erreicht die Abtasteinrichtung 2 das linke Ende der Maßverkörperung 1, steht an der Leitung 33 das Binärsignal 0, ansonsten 1 an. Erreicht die Abtasteinheit 2 das rechte Ende der Maßverkörperung 1, steht an der Leitung 34 das Binärsignal 0, ansonsten 1 an.

Die Überwachungsschaltung 20, sowie die Schaltung 30 sind vorzugsweise in der Abtasteinrichtung 2 oder dem Montagefuß 15 untergebracht. Zusätzlich ist in der Längenmeßeinrichtung eine Logikschaltung 40 gemäß Figur 13 vorgesehen, an deren Eingang die drei Leitungen 23, 33 und 34 angeschlossen sind. Die Logikschaltung 40 besteht aus zwei NAND-Gattern 41, 42. Dem einen NAND-Gatter 41 wird über die Leitung 23 ein Überwachungssignal, sowie über die Leitung 33 das Endlagensignal "linker Endbereich" zugeführt, so daß in Abhängigkeit der Signale der Leitungen 23, 33 folgende Ausgangssignale an der Leitung 43 anstehen:

```
23 │ 0 1 0 1
33 │ 0 0 1 1
───┼─────────
43 │ 1 1 1 0
```

Ebenso werden dem weiteren NAND-Gatter 42 das Überwachungssignal über die Leitung 23, sowie über die Leitung 34 das Endlagensignal "rechter Endbereich" zugeführt, so daß in Abhängigkeit der Signale an den Leitungen 23, 34 folgende Ausgangssignale an der Leitung 44 anstehen:

```
23 │ 0 1 0 1
34 │ 0 0 1 1
───┼─────────
44 │ 1 1 1 0
```

Durch die Logikschaltung 40 wird die Information der drei Leitungen 23, 33, 34 über nur zwei Leitungen 43, 44 zu einer im Regelfall vom Meßort weiter entfernt angeordneten Auswerteeinheit 50 übertragen. Aus den Binärsignalen der Leitungen 43, 44 kann auf die Lage und den Zustand des Hallelementes 7 geschlossen werden, wobei folgende Fälle unterscheidbar sind:

| | mögliche Binärsignalkombinationen: | |
|---|---|---|
| Leitung 43 | 1 | 1 |
| Leitung 44 | 1 | 0 |
| Lage/Zustand | Leitungsbruch, Defekt des Hallelementes 7 | linker Endbereich mit N-Pol |

| | mögliche Binärsignalkombinationen: | |
|---|---|---|
| Leitung 43<br>Leitung 44 | 0<br>1 | 0<br>0 |
| Lage/Zustand | rechter Endbereich mit S-Pol | betriebsbereit |

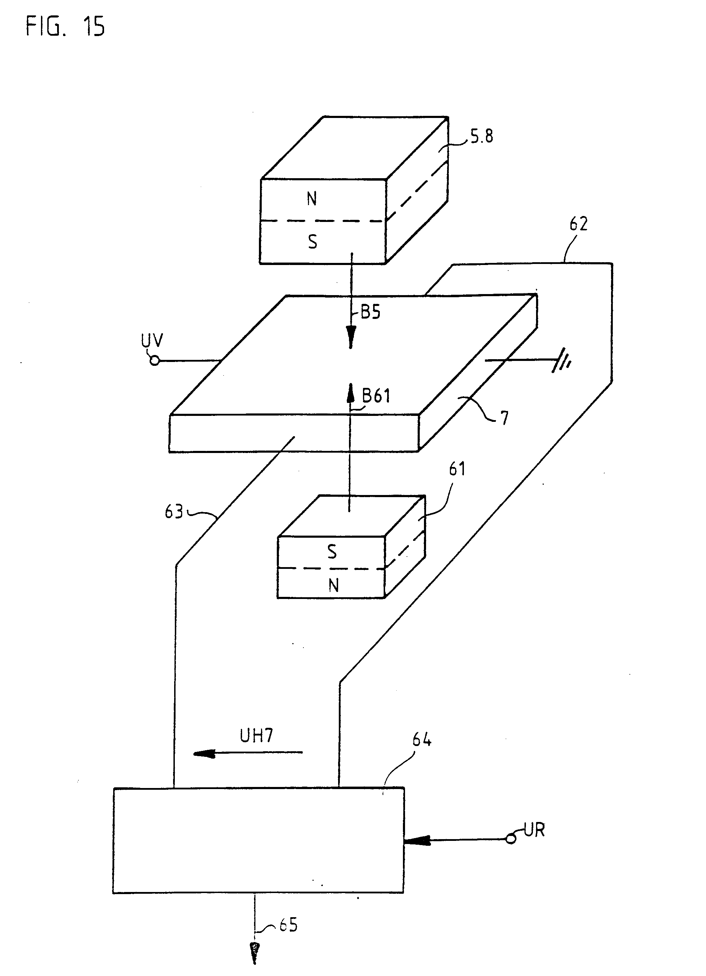

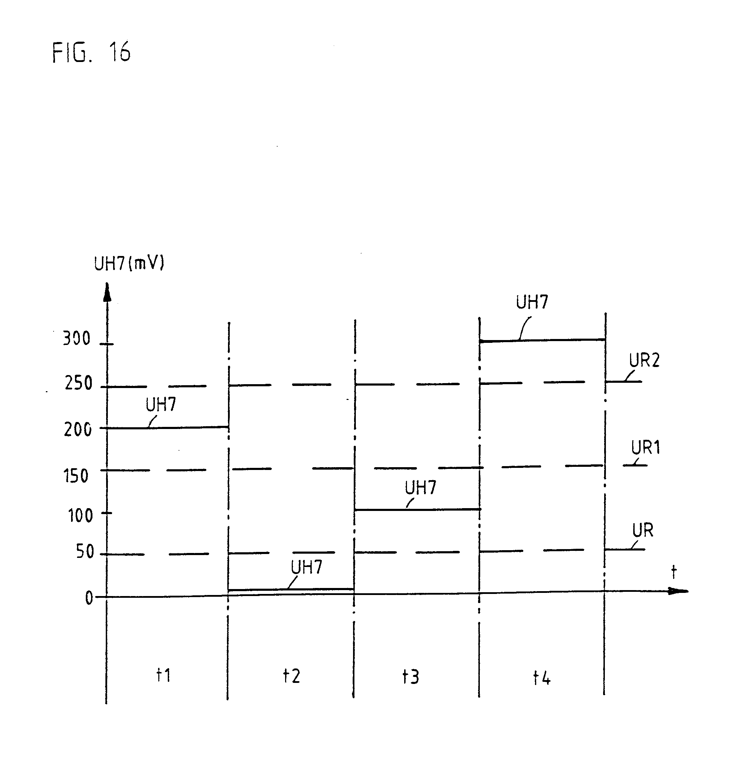

Anhand der Figuren 15 und 16 wird eine weitere Möglichkeit der Überwachung eines Hallelementes 7 erläutert. Die Einrichtung zur Überwachung besteht aus einem Magneten 61, der dem zu überwachenden Hallelement 7 stationär zugeordnet, beispielsweise auf ihn aufgeklebt ist. Der Magnet 61 erzeugt ein Magnetfeld B61, wodurch die Hallspannung UH7, welche in der Regel ohne äußeres Magnetfeld zumindest annähernd 0V ist, auf etwa 200mV ansteigt. Dieser Zustand ist in Figur 16 im Bereich t1 dargestellt. Zur besseren Darstellung der Hallspannungen UH7 wurde bei diesem Beispiel eine höhere Hallspannung UH7 als bei den vorhergehenden Beispielen gewählt.

Bei einem Ausfall der Spannungsversorgung UV, bei einem Defekt der Ausgangsleitungen 62, 63 sowie bei einem Defekt des Hallelementes 7 sinkt die Hallspannung UH7 auf 0V. Dieser Zustand ist in Figur 16 im Bereich t2 dargestellt. Der Spannungsabfall kann mittels bekannter Triggerschaltungen in einer Überwachungsschaltung 64 detektiert werden. In der Überwachungsschaltung 64 wird die an den Ausgangsleitungen 62, 63 anstehende Hallspannung UH7 mit einer vorgegebenen Vergleichsspannung UR verglichen. Unterschreitet die Hallspannung UH7 die Vergleichsspannung UR, wird von der Überwachungsschaltung 64 auf der Leitung 65 ein Fehlersignal abgegeben.

Wenn das Hallelement 7 in den Einflußbereich des Magnetfeldes eines der Magnetstreifen 5.7, 5.8 gemäß Figur 9 gelangt, so sinkt oder steigt die Hallspannung UH7. In Figur 15 ist der Zustand dargestellt, bei dem das Hallelement 7 der Abtasteinrichtung 2 im Bereich der rechten Grenzlage der Längenmeßeinrichtung steht. Der Magnetstreifen 5.8 erzeugt ein Magnetfeld B5, dessen Richtung zu dem Magnetfeld B61 entgegengesetzt gerichtet ist. Die Hallspannung UH7 sinkt um etwa 100mV auf 100mV. Dieser Zustand ist in Figur 16 im Bereich t3 dargestellt.

Gelangt das Hallelement 7 in das Magnetfeld des Magnetstreifens 5.7, dessen Richtung zu B5 entgegengesetzt ist und sich somit zu dem Magnetfeld B61 des relativ zum Hallelement 7 stationär vorgesehenen Magneten 61 addiert, so steigt die Hallspannung UH7 um etwa 100mV auf 300mV. Dieser Zustand ist in Figur 16 im Bereich t4 dargestellt. Um bei diesen Verhältnissen den Ausfall des Hallelementes 7 zu erkennen, wird die Vergleichsspannung UR auf 50mV gesetzt. Sinkt die Hallspannung UH7 unter UR = 50mV, so wird das Fehlersignal erzeugt.

Um Kollisionen während des Ausfalls des Hallelementes 7 zu vermeiden, dient das Fehlersignal auch zum Abschalten eines Maschinenantriebes. Ein Abschaltsignal wird somit bei einem Ausfall des Hallelementes 7, bei einem Defekt der Ausgangsleitungen 62, 63 sowie beim Überfahren einer der Grenzlagen einer numerischen Steuerung oder direkt verstärkt einem Abschaltrelais des Maschinenantriebes zugeführt. Zur Erzeugung des Abschaltsignales wird die Hallspannung UH7 in der Überwachungsschaltung 64 mit zwei Vergleichsspannungen UR1 = 150mV und UR2 = 250mV verglichen. Der Normalbetrieb ist somit durch die beiden Vergleichsspannungen UR1 und UR2 zwischen 150mV und 250mV vorgegeben. Ein Abschaltsignal wird auf der Leitung 65 abgegeben, wenn die Hallspannung UH7 unter 150mV fällt oder über 250mV ansteigt.

Sind an den Grenzlagen nur Magnetstreifen 5.3, 5.4 einer Magnetfeldrichtung vorgesehen, wie in Figur 3 dargestellt, so muß die Hallspannung UH7 nur mit der Vergleichsspannung UR1 zur Bildung eines Abschaltsignales verglichen werden, da gewährleistet ist, daß die Hallspannung UH7 beim Erreichen aller Grenzlagen sowie auch beim Ausfalls des Hallelementes 7 unter UR1 fällt.

Es ist auch vorteilhaft, ein Hallelement zur Abtastung von Magnetstreifen 5.2, 5.5, 5.7 einer Magnetfeldrichtung und ein weiteres Hallelement zur Abtastung von Magnetstreifen 5.1, 5.3, 5.4, 5.6, 5.8 der dazu entgegengesetzten Magnetfeldrichtung vorzusehen. Der jedem Hallelement stationär zugeordnete Magnet erzeugt dabei jeweils ein Magnetfeld, das dem abzutastenden Magnetstreifen 5.1 bis 5.8 entgegengesetzt gerichtet ist. Dies hat den Vorteil, daß ein großer Arbeitsbereich für die Hallspannung UH7 garantiert ist, ohne daß eine Übersteuerung (Sättigung) des Hallelementes erfolgt. Da die Hallspannung aufgrund des abzutastenden Magneten entweder nur in Richtung 0V ansteigt oder in Richtung 0V abfällt muß die Hallspannung eines Hallelementes jeweils nur mit einer einzigen Vergleichsspannung verglichen werden, um den Ausfall und gleichzeitig das Erreichen einer Grenzlage zu detektieren.

Zur sicheren Übertragung des Abschaltsignales zur NC-Steuerung oder einer Antriebseinheit ist es angebracht, den Signalweg von der Meßeinrichtung zu der NC-Steuerung oder der Antriebseinheit zweikanalig auszulegen und das Abschaltsignal im Gegentaktbetrieb zu übertragen. Dabei wird auf einer Leitung das Abschaltsignal und auf der weiteren Leitung das dazu inverse Signal übertragen. Sobald also die Empfangseinheit (NC-Steuerung oder Antriebseinheit) auf beiden Leitungen gleiche Signalzustände erkennt, ist dies ein Indiz dafür, daß ein Fehler bei der Übertragung erfolgt ist. Auch in diesem Fall ist es sinnvoll, die Antriebseinheit sofort zu stoppen.

**Patentansprüche**

1. Längen- oder Winkelmeßeinrichtung mit einer Maßverkörperung (1) und einer relativ dazu bewegbaren Abtasteinrichtung (2) zur Abtastung der Maßverkörperung (1), wobei an der Meßeinrichtung Grenzlagenschalter vorgesehen sind, indem an der Maßverkörperung (1) und/oder an einem Träger (14) der Maßverkörperung (1) zumindest im Bereich einer Grenzlage ein magnetisch abtastbares Element angebracht ist, dadurch gekennzeichnet, daß das magnetisch abtastbare Element (5.1 bis 5.6) von einem Hallelement (7) der Abtasteinrichtung (2) abgetastet wird.

2. Längen- oder Winkelmeßeinrichtung nach Anspruch 1, dadurch gekennzeichnet, daß das magnetisch abtastbare Element ein Magnetstreifen (5.1 bis 5.8) ist, der an der Grenzlage der Maßverkörperung (1) und/oder des Trägers (14) aufgesetzt ist, wobei der Magnetstreifen (5.1 bis 5.8) zwei flächige Magnetpole (N, S) aufweist, so daß das Magnetfeld senkrecht zur Meßrichtung (X) verläuft.

3. Längen- oder Winkelmeßeinrichtung nach Anspruch 2, dadurch gekennzeichnet, daß die Magnetstreifen (5.1 bis 5.8) mit einem flächigen Magnetpol (N, S) an einer Fläche der Maßverkörperung (1) oder an dessen Träger (14) aufgesetzt sind.

4. Längen- oder Winkelmeßeinrichtung nach einem der Ansprüche 1 bis 3, dadurch gekennzeichnet, daß die Maßverkörperung (1) eine Teilung (3) und eine Spur (8) mit mehreren Referenzmarken (8.1 bis 8.4) aufweist, wobei zur Auswahl einer dieser Referenzmarken (8.3) ein Magnetstreifen (9.1) zugeordnet ist.

5. Längen- oder Winkelmeßeinrichtung nach einem der Ansprüche 1 bis 4, dadurch gekennzeichnet, daß zur Unterscheidung des rechten und linken Bereiches einer Referenzmarke (8.5) zumindest auf einer Seite dieser Referenzmarke (8.5) ein Magnetstreifen (6) vorgesehen ist, wobei ein flächiger Pol (S) dieses Magnetstreifens (6) einem zur Abtastung vorgesehenen Hallelement (7) zugewandt und der gegensinnige Pol (N) abgewandt ist, so daß das Magnetfeld senkrecht zur Meßrichtung (X) verläuft.

6. Längen- oder Winkelmeßeinrichtung nach einem der Ansprüche 1 bis 5, dadurch gekennzeichnet, daß zur Unterscheidung zwischen mehreren Grenzlagen und/oder Referenzlagen und/oder rechten und linken Bereichen einer Referenzmarke (8.5) unterschiedlich magnetisierte Magnetstreifen (5.1 bis 5.8, 9.1, 10.1, 10.2, 6) oder unterschiedlich breite Magnetstreifen oder unterschiedlich dicke Magnetstreifen verwendet werden und/oder eine unterschiedliche Anzahl von Magnetstreifen (5.6, 6) nebeneinander oder aufeinander angeordnet werden.

7. Längen- oder Winkelmeßeinrichtung nach Anspruch 6, dadurch gekennzeichnet, daß an einem Endbereich der Maßverkörperung (1) und/oder des Trägers (14) der Magnetstreifen (5.1, 5.6, 5.8) derart aufgesetzt ist, daß dem Hallelement (7) bei der Abtastung ein flächiger Magnetpol (S) und an dem anderen Endbereich der Magnetstreifen (5.2, 5.5, 5.7) derart aufgesetzt ist, daß dem Hallelement (7) bei der Abtastung ein dazu gegenpoliger flächiger Magnetpol (N) gegenübersteht.

8. Längen- oder Winkelmeßeinrichtung nach Anspruch 4 oder 6, dadurch gekennzeichnet, daß der einer Referenzmarke (8.3) zugeordnete Magnetstreifen (9.1) dem Hallelement (7) mit einem flächigen Magnetpol (N) gegenübersteht und die Magnetstreifen (5.3, 5.4) an den Grenzlagen der Maßverkörperung (1) und/oder des Trägers dem Hallelement (7) mit dazu flächig gegenpoligen Magnetpolen (S) gegenüberstehen.

9. Längen- oder Winkelmeßeinrichtung nach einem der Ansprüche 1 bis 8, dadurch gekennzeichnet, daß mehrere Magnetstreifen (5.3, 5.4, 9.1) in einer Spur (9) vorgesehen sind, denen weitere Magnetstreifen (10.1, 10.2) zur Unterscheidung der Positionen mehrerer Grenzlagen und/oder Referenzmarken (8.3) zugeordnet sind, und daß zur Abtastung dieser Magnetstreifen (10.1, 10.2) ein weiteres Hallelement (11) in der Abtasteinrichtung (2) vorgesehen ist, oder alle Magnetstreifen (5.3, 5.4, 9.1, 10.1, 11.2) von einem gemeinsamen Hallelement abgetastet werden.

**10.** Längen- oder Winkelmeßeinrichtung nach Anspruch 5, dadurch gekennzeichnet, daß entlang des gesamten Meßbereiches auf einer Seite der Referenzmarke (8.5) ein Magnetstreifen (6) vorgesehen ist, und daß an den Endbereichen der Maßverkörperung (1) weitere Magnetstreifen (5.5, 5.6) angebracht sind, wobei zur Abtastung aller Magnetstreifen (5.5, 5.6, 6) ein einziges Hallelement (7) vorgesehen ist.

**11.** Längen- oder Winkelmeßeinrichtung nach einem der vorhergehenden Ansprüche, dadurch gekennzeichnet, daß die Magnetstreifen (5.1 bis 5.6, 9.1, 10.1, 10.2, 6) aufgeklebt sind.

**12.** Längen- oder Winkelmeßeinrichtung nach einem der vorhergehenden Ansprüche 1 bis 10, dadurch gekennzeichnet, daß die Magnetstreifen (5.7, 5.8) in einer Nut (16) der Maßverkörperung und/oder des Trägers (14) eingesetzt sind.

**13.** Längen- oder Winkelmeßeinrichtung nach einem der vorhergehenden Ansprüche, dadurch gekennzeichnet, daß der Träger der Maßverkörperung (1) ein Gehäuse (14) ist, und daß die Magnetstreifen (5.7, 5.8) an einer Fläche des Gehäuses (14) aufgesetzt oder in einer Nut (16) des Gehäuses (14) eingesetzt sind.

**14.** Längen- oder Winkelmeßeinrichtung nach Anspruch 1, dadurch gekennzeichnet, daß das Hallelement (7) an eine Überwachungsschaltung (20, 64) angeschlossen ist, wobei die Überwachungsschaltung (20, 64) bei fehlerhaftem Betrieb des Hallelementes (7) ein Fehlersignal (F) auf einer Ausgangsleitung (23) abgibt.

**15.** Längen- oder Winkelmeßeinrichtung nach Anspruch 14, dadurch gekennzeichnet, daß beim Auftreten des Fehlersignales (F) oder wenn das Hallelement (7) eine Grenzlage erreicht, ein Abschaltsignal an eine numerische Steuerung oder eine Antriebseinheit der relativ beweglichen Teile (1, 2) abgegeben wird.

**16.** Längen- oder Winkelmeßeinrichtung nach Anspruch 14, dadurch gekennzeichnet, daß die Ausgangsleitungen (24, 25; 62, 63) des Hallelementes (7) an die Überwachungsschaltung (20, 64) angeschlossen sind, und die an diesen Ausgangsleitungen (24, 25; 62, 63) anstehende Spannung (U24, U25, UH7) mit zumindest einer Vergleichsspannung (U1, U2, UR) verglichen wird, welche den fehlerfreien Arbeitsbereich des Hallelementes (7) definiert und ein Fehlersignal (F) erzeugt wird, wenn die Spannung (U24, U25, UH7) die Vergleichsspannung (U1, U2, UR) unter- oder überschreitet.

**17.** Längen- oder Winkelmeßeinrichtung nach Anspruch 16, dadurch gekennzeichnet, daß jede der Ausgangsleitungen (24, 25) in der Überwachungsschaltung (20) an eine Vorspannung (UP1) bzw. ein Bezugspotential (UP2) angeschlossen ist, wodurch im Fehlerfall die von der Überwachungsschaltung (20) detektierte Spannung (U24, U25) definiert verschoben und ein Fehlersignal erzeugt wird.

**18.** Längen- oder Winkelmeßeinrichtung nach Anspruch 16, dadurch gekennzeichnet, daß die Überwachungsschaltung (20) zwei Komparatoren (21, 22) enthält, wobei an einem Eingang des ersten Komparators (21) die erste Ausgangsleitung (24) des Hallelementes (7) sowie die Vorspannung (UP1) und am anderen Eingang die Vergleichsspannung (U1) anliegt, daß weiterhin an einem Eingang des zweiten Komparators (22) die zweite Ausgangsleitung (25) des Hallelementes (7) sowie das Bezugspotential (UP2) und am anderen Eingang die weitere Vergleichsspannung (U2) anliegt.

**19.** Längen- oder Winkelmeßeinrichtung nach Anspruch 7, dadurch gekennzeichnet, daß das Hallelement (7) an eine Schaltung (30) zur Unterscheidung des einen und des anderen Endbereiches angeschlossen ist, wobei die Spannung (U24, U25, UH7) des Hallelementes (7) mit zumindest einer Vergleichsspannung (U3) verglichen wird und die Endlagen definierende Ausgangssignale abgegeben werden.

**20.** Längen- oder Winkelmeßeinrichtung nach den Ansprüchen 14 und 19, dadurch gekennzeichnet, daß zwei Ausgangsleitungen (33, 34) der Schaltung (30) sowie die Ausgangsleitung (23) der Überwachungsschaltung (20) an eine Logikschaltung (40) angeschlossen sind, wobei an einer der Ausgangsleitungen (33) der Schaltung (30) ein die eine Endlage definierendes Ausgangssignal und an der anderen Ausgangsleitung (34) der Schaltung (30) ein die andere Endlage definierendes Ausgangssignal ansteht, und daß am Ausgang der Logikschaltung (40) zwei Leitungen (43, 44) vorgesehen sind, und die Kombination der beiden Ausgangssignale dieser Leitungen (43, 44) die Endlagen sowie den Zustand des Hallelementes (7) bestimmt.

**21.** Längen- oder Winkelmeßeinrichtung nach einem der Ansprüche 14 bis 16, dadurch gekennzeichnet, daß dem Hallelement (7) ein stationärer Magnet (61) zugeordnet ist, durch den die am Hallelement (7) anstehende Hallspannung (UH) auf einen vorgegebenen, von 0V abweichenden Wert gesetzt wird.

**22.** Längen- oder Winkelmeßeinrichtung nach Anspruch 21, dadurch gekennzeichnet, daß das Magnetfeld (B61) des dem Hallelement (7) stationär zugeordneten Magneten (61) entgegengesetzt zu dem externen Magnetfeld (B5) ist, das durch das Hallelement (7) erfaßt werden soll.

**23.** Längen- oder Winkelmeßeinrichtung nach Anspruch 15, dadurch gekennzeichnet, daß das Abschaltsignal im Gegentaktbetrieb auf zwei Leitungen übertragen wird.

FIG. 1

FIG. 2

FIG. 3

FIG. 4

FIG. 5a

FIG. 5b

FIG. 6

FIG. 7

FIG. 8

FIG. 9

FIG. 10

FIG. 11

FIG. 12

FIG. 13

FIG. 14

FIG. 15

FIG. 16